# EUROPEAN PATENT APPLICATION

(11) **EP 3 955 338 A1**
(43) Date of publication of application: **16.02.2022**
(21) Application number: 21190525.2
(22) Date of filing: 10.08.2021
(51) Int. Cl.: H01M 4/131

(54) **COMPOSITE CATHODE MATERIAL, CATHODE PLATE AND PREPARATION METHOD THEREOF, AND BATTERY**

(30) Priority: 14.08.2020 CN 202010821206
(71) Applicant: BYD Company Limited, Guangdong 518118 (CN)
(72) Inventor: CHEN, Na, Shenzhen, Guangdong (CN); RUAN, Zewen, Shenzhen, Guangdong (CN); ZHU, Yan, Shenzhen, Guangdong (CN); HAO, Rong, Shenzhen, Guangdong (CN); PAN, Yi, Shenzhen, Guangdong (CN)
(74) Representative: Hoffmann Eitle

(57) **Abstract**

The present invention discloses a composite cathode material, a cathode plate and a preparation method thereof, and a battery. The composite cathode material comprises a ternary material and a phase-transition material. The phase-transition material undergoes phase transition in the charge/discharge interval of the ternary material. The ternary material has a single crystal structure, the phase-transition material has a single crystal structure or a poly-crystalline structure, and the phase-transition material is coated on the surface of the ternary material. The weight ratio of the ternary material to the phase-transition material is 80:20-99.8:0.2. The ternary material has a nanohardness of 0.001-5 Gpa, and the phase-transition material has a nanohardness of 0.01-10 GPa. According to the embodiment of the present invention, the cycle performance of the battery is improved, the impedance increase of the material during the aging process is reduced, and the safety of the battery is improved.

## Description

### FIELD

The present invention relates to the technical field of batteries, and in particular to a composite cathode material, a cathode plate and a preparation method thereof, and a battery.

### BACKGROUND

Ternary materials, due to their high energy density, are widely used as a cathode material in electric vehicle batteries. Moreover, as the energy density requirement for electric vehicles continues to increase, ternary materials used have transitioned from LiNi_{1/3}Co_{1/3}Mn_{1/3}O₂ to LiNi_{0 .5} Co_{0.2} Mn_{0 .3} O₂, and even LiNi_{0 .6} Co_{0 .2} Mn_{0 .2} O₂, LiNi_{0.8}Co_{0.1}Mn_{0.1}O₂, LiNiO₂, NCA and other high-nickel materials.

However, the ternary high-nickel material has problems such as poor cycle performance at room temperature, increased DCIR (DC resistance at a specific load and discharge current) after cycles, serious gas production after cycles, and poor safety performance. To solve the above problems of ternary high-nickel materials, the currently available technical solution is to improve the structural stability of the materials as much as possible, slow down the capacity decrease due to phase transition of the materials during the long-term cycle process, and improve the safety of the materials, by optimization by coating, doping and sintering. This technical solution cannot essentially solve the change in phase transition of the materials in a fixed charge/discharge interval, but only improves the structural stability of the materials.

### SUMMARY

To resolve at least one of the above technical problems, the present invention is provided. Specifically, in one aspect of the present invention, a composite cathode material is provided, which includes:
a ternary material and a phase-transition material, where the phase-transition material undergoes phase transition in the charge/discharge interval of the ternary material;
the ternary material has a single crystal structure, the phase-transition material has a single crystal structure or a poly-crystalline structure, and the phase-transition material is coated on the surface of the ternary material;
the weight ratio of the ternary material to the phase-transition material is 80:20-99.8:0.2;
the ternary material has a nanohardness of 0.001-5 Gpa, and the phase-transition material has a nanohardness of 0.01-10 Gpa; and
the ternary material has a particle size D50 of 3.0-6.0 µm, and the primary particles in the phase-transition material have a D50 of 10-50 nm.

In an embodiment of the present invention, the ternary material has a nanohardness of 0.2-1.4 GPa, and the phase-transition material has a nanohardness of 1.5-3.5 GPa.

In an embodiment of the present invention, the ternary material has a tap density of 2.0-2.8 g/cm³, and the phase-transition material has a tap density of 0.8-1.5 g/cm³.

In an embodiment of the present invention, the ternary material has a D50 of 3.5-5.0 µm, and the primary particles in the phase-transition material have a D50 of 20-40 nm.

In an embodiment of the present invention, the ternary material has a chemical formula of LiNiₓCo_{y}M_{z}, where x+y+z=1, and M includes Mn, Al, Zr, Ti, Y, Sr or W.

In an embodiment of the present invention, the ternary material includes a nickel-cobalt-manganese ternary material or a nickel-cobalt-aluminum ternary material.

In an embodiment of the present invention, the phase-transition material has an olivine structure, and the phase-transition material has a chemical formula of LiAₓB_{y}PO₄, where x+y=1, A comprises Fe, Co, Mn, Ni, Cr or V, and B comprises Fe, Co, Mn, Ni, Cr or V.

In an embodiment of the present invention, the phase-transition material comprises lithium manganese iron phosphate, lithium manganese vanadium phosphate, or lithium chromium iron phosphate.

In another aspect of the present invention, a method for preparing a composite cathode material according to the present invention is provided, which includes
feeding a ternary material, a phase-transition material and NMP at a certain weight ratio to a mechanical blender and blending to form a composite material; and
baking the blended composite material at a certain temperature to obtain the composite cathode material,
where the ternary material is a single crystal material, and the ternary material has a particle size D50 of 3.0-6.0 µm; the phase-transition material is a single crystal material or a secondary spherical material, and the primary particles in the phase-transition material have a particle size D50 of 10-50 nm; the weight ratio of the ternary material to the phase-transition material is 80:20-99.8:0.2; and the ternary material has a nanohardness of 0.001-5 Gpa, and the phase-transition material has a nanohardness of 0.01-10 GPa.

In an embodiment of the present invention, the rotational speed of the mechanical blender is 4000-7000 r/min, and the blending time is 10-30 min.

In an embodiment of the present invention, the rotational speed of the mechanical blender is 4500-6500 r/min, and the blending time is 15-25 min.

In an embodiment of the present invention, the baking temperature of the composite material is 80-120°C, and the baking time is 0.5-2.5 hrs.

In an embodiment of the present invention, the baking temperature of the composite material is 95-105°C, and the baking time is 1-2 hrs.

In another aspect of the present invention, a cathode plate is provided, which includes a current collector and a composite cathode material according to the present invention provided on the current collector.

In an embodiment of the present invention, the intensity ratio of crystallographic orientation 003 to crystallographic orientation 110 is 10-100 after the cathode plate is compacted.

In another aspect of the present invention, a method for preparing a cathode plate according to the present invention is provided, which includes
adding a binder to an amount of NMP to form a binder solution, where the binder is PVDF with an F-containing group and/or a carboxyl group, an ester group, or an amino group on a polymer chain thereof;
adding an amount of a conductive agent to the binder solution, and stirring to form a slurry;
after standing for a period of time, adding a composite cathode material according to the present invention to the slurry and fully stirring to obtain a final slurry; and
coating the final slurry onto a current collector, removing the NMP in the slurry by high-temperature baking, rolling, and slicing to obtain the cathode plate.

In an embodiment of the present invention, before the final slurry is obtained, the method further includes adding an amount of lithium carbonate to the slurry.

In another aspect of the present invention, a battery is provided, which includes a cathode plate according to the present invention, an anode plate, and a separator provided between the cathode plate and the anode plate.

In the composite cathode material, the cathode plate and the preparation method thereof, and the battery proposed in the present invention, the cathode material includes a ternary single crystal material and a phase-transition material coated on the surface of the ternary single crystal material. On the one hand, the ternary single crystal material itself has the advantages of good high-temperature performance, less gas production, and high safety. On the other hand, the phase-transition material coated on the surface of the ternary material increases the thermal runaway start temperature of the ternary material and the battery and reduces the heat release during the thermal runaway process, thereby improving the safety. Moreover, by means of the phase-transition material, the phase transition of the ternary material in the charge/discharge interval is slowed down or delayed, and the capacity decrease caused by the phase transition of the ternary material during the long-term cycle process is slowed down, thereby improving the cycle performance of the battery, reducing the impedance increase of the material during the aging process, and improving the safety of the battery.

Further, in the embodiment of the present invention, the orientation of the ternary material in the 003 crystallographic orientation is restricted by defining the nanohardness of the ternary material and the phase-transition material, and higher electrode density of the cathode plate is realized by defining the tap densities of the ternary material and the phase-transition material, thus ensuring the energy density of the battery.

### BRIEF DESCRIPTION OF THE DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of a composite cathode material according to an embodiment of the present invention;
FIG. 2 shows CV curves of a conventional ternary material and a composite cathode material according to an embodiment of the present invention;
FIG. 3 shows a partially enlarged view of the CV curves shown in FIG. 2;
FIG. 4 shows the orientations of a ternary single crystal material and a composite cathode material according to an embodiment of the present invention in the 003 crystallographic orientation;
FIG. 5 shows XRD patterns of a conventional ternary material and a composite cathode material according to an embodiment of the present invention after the cathode plate is compacted;
FIG. 6 shows a schematic flow chart of a method for preparing a composite cathode material according to the present invention; and
FIG. 7 shows a schematic flow chart of a method for preparing a cathode plate according to the present invention.

### DETAILED DESCRIPTION

In the following description, numerous specific details are given to facilitate a more thorough understanding of the present invention. However, it is obvious to those skilled in the art that the present invention can be implemented without one or more of these details. In other examples, to avoid confusion with the present invention, some technical features known in the art are not described

It should be understood that the present invention can be implemented in different forms and should not be construed as being limited to the embodiments presented herein. Conversely, these embodiments are provided for the purpose of making the disclosure thorough and complete, and conveying the scope of the present invention fully to those skilled in the art. In the drawings, for the sake of clarity, the sizes and relative sizes of layers and regions may be exaggerated, and the same reference numerals denote the same elements throughout the present invention.

It should be understood that when an element or layer is referred to as being "on", "adjacent to", "connected to" or "coupled to" other elements or layers, it can be directly located on, adjacent, connected or coupled to the other elements or layers, or there may be an intervening element or layer. Conversely, when an element is referred to as being "directly on", "directly adjacent to", "directly connected to" or "directly coupled to" other elements or layers, no intervening element or layer is present. It should be understood that although the terms first, second, and third, etc. can be used to describe various elements, components, regions, layers and/or portions, these elements, components, regions, layers and/or portions should not be limited by these terms. These terms are only used to distinguish one element, component, region, layer or portion from another element, component, region, layer or portion. Therefore, without departing from the teachings of the present invention, the first element, component, region, layer or portion discussed below may be expressed as a second element, component, region, layer or portion.

Terms indicating the spatial relationships such as "under", "below", "lower", "beneath", "above", and "upper" are used herein for the convenience of description, to describe the relationship between one element or feature and other elements or features shown in the figure. It can be understood that in addition to the orientations shown in the figures, the terms indicating the spatial relationships are also intended to include different orientations of a device in use and operation. For example, if the device in the figure is upside down, then an element or feature described as being "under", "beneath" or "below" other elements will be oriented to be "above" the other elements or features. Therefore, the exemplary terms "under" and "below" may include both an upper and a lower orientation. The device can be otherwise oriented (rotated by 90 degrees or in other orientations) and the spatial descriptions used here are interpreted accordingly.

The terms are used herein merely for purpose of describing specific embodiments and not as a limitation of the present invention. When used herein, the singular forms "a", "an" and "the" are also meant to include the plural form, unless otherwise clearly indicated. It should also be understood that the terms "consisting of" and/or "including", when used in this specification, confirm the existence of the described features, integers, steps, operations, elements and/or components, but do not exclude the existence or addition of one or more other features, integers, steps, operations, elements, components and/or groups. As used herein, the term "and/or" includes any and all combinations of related listed items.

For the purpose of thoroughly understanding the present invention, a detailed structure will be presented in the following description to explain the technical solution proposed in the present invention. Optional embodiments of the present invention are described in detail as follows. However, besides these detailed descriptions, the present invention may also have other implementations.

As described above, the ternary high-nickel material has problems such as poor cycle performance at room temperature, increased DCIR (DC resistance at a specific load and discharge current) after cycles, serious gas production after cycles, and poor safety performance. To solve the above problems of ternary high-nickel materials, the currently available technical solution is to improve the structural stability of the materials as much as possible, slow down the capacity decrease due to phase transition of the materials during the long-term cycle process, and improve the safety of the materials, by optimization by coating, doping and sintering. However, this technical solution cannot essentially solve the change in phase transition of the materials in a fixed charge/discharge interval, but only improves the structural stability of the materials. In the present invention, from the perspective of plate design and battery design, the cycle and safety performances of the materials are improved to overcome the current problems on the basis of improving the stability of the materials.

The idea of the present invention is to coat a phase-transition material on the surface of a ternary material to improve the cycle and safety performances of the ternary material on the basis of improving the structural stability of the bulk material. The general idea is to share more charge and discharge tasks on a charge and discharge platform of a ternary high-nickel material of about 4.25V (relative to the potential of Li) and slow down or delay the phase transition in the charge/discharge interval of the material by taking advantage of the charge and discharge characteristics of different materials. Moreover, the phase-transition material is evenly coated on the surface of the ternary material, and the coating layer has a heat isolation effect to increase the thermal runaway start temperature of the material and reduce the heat released during the thermal runaway process.

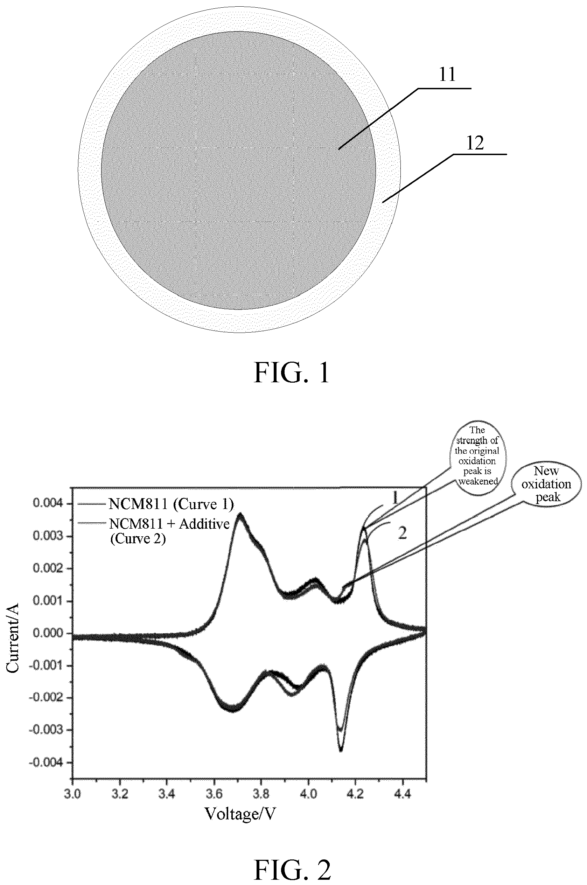

As shown in FIG. 1, the composite cathode material proposed in the present invention includes a ternary material 11 and a phase-transition material 12, where the phase-transition material undergoes phase transition in the charge/discharge interval of the ternary material. By means of the phase-transition material, the phase transition of the ternary material in the charge/discharge interval is slowed down or delayed, and the capacity decrease caused by the phase transition of the ternary material during the long-term cycle process is slowed down, thereby improving the cycle performance of the battery, reducing the impedance increase of the material during the aging process, and improving the safety of the battery.

Exemplarily, the weight ratio of the ternary material to the phase-transition material is 80:20-99.8:0.2, for example, the weight ratio of the ternary material to the phase-transition material is 90:10 to 95:5.

Exemplarily, in an embodiment of the present invention, the ternary material has a chemical formula of LiNiₓCo_{y}M_{z}, where x+y+z=1 and M includes, but is not limited to, Mn, Al, Zr, Ti, Y, Sr or W. For example, the ternary material includes a nickel-cobalt-manganese ternary material (i.e. NCM) or a nickel-cobalt-aluminum ternary material (i.e. NCA). For example, the ternary material is a high-nickel ternary material of LiNiₓCo_{y}M_{z} where x is greater than 0.6.

The phase-transition material has a single crystal structure or a poly-crystalline structure. Exemplarily, the phase-transition material has an olivine structure, and the phase-transition material has a chemical formula of LiAₓB_{y}PO₄, where x+y=1, A includes, but is not limited to, Fe, Co, Mn, Ni, Cr or V, and B includes, but is not limited to, Fe, Co, Mn, Ni, Cr or V. For example, the phase-transition material includes lithium manganese iron phosphate, lithium manganese vanadium phosphate, or lithium chromium iron phosphate. For example, the phase-transition material is lithium manganese iron phosphate (LMFP) having a structure of LiMnₓFe_{y}PO₄, where x is a value in the range of 0.05-0.95, and preferably in the range of 0.5-0.85; y is a value in the range of 0.05-0.95, and preferably in the range of 0.15-0.5; and the material is a single crystal material.

In this embodiment, the phase-transition material undergoes phase transition between 4.0 and 2.0 V. When the phase-transition material and the ternary high-nickel material form a composite cathode material, the structural phase transition of the ternary high-nickel material at 4.25V (relative to the potential of Li) can be weakened or delayed.

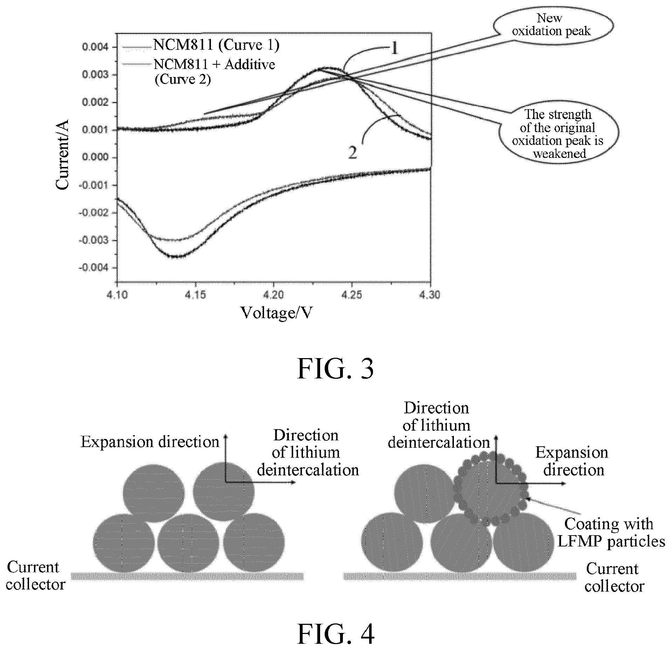

For example, the ternary material is NCM811, and the composite material is an LMFP coated ternary material. The CV curves of cathode plates prepared therewith are shown in FIG. 2 and FIG. 3. FIG. 3 is a partially enlarged view of FIG. 2, where curve 1 represents the CV curve of NCM811, and curve 2 represents the CV curve of the composite cathode material. From FIG. 2 and FIG. 3, it can be seen that the CV curve of the cathode plate prepared with the composite cathode material has a new oxidation peak at about 4.15 V, and at the same time, the current intensity of the oxidation peak of the NCM811 material at about 4.25V is reduced. This shows that the compounding of an amount of a material (e.g. lithium manganese iron phosphate, lithium manganese vanadium phosphate, or lithium chromium iron phosphate) having a phase-transition platform over 4.0-2.0 V, for example, 3.95-4.15 V can weaken or delay the structural phase transition of the ternary high-nickel material at 4.25 V (relative to the potential of Li).

Further, to better improve the cycle performance and safety of the battery in the present invention, the ternary material is a single crystal material, and the composite material is coated with a layer of phase-transition material, such as LMFP, on the surface of the single crystal ternary material. On the one hand, the ternary single crystal material itself has the advantages of good high-temperature performance, less gas production, and high safety. On the other hand, the phase-transition material is evenly coated on the surface of the ternary material, and the coating layer has a heat isolation effect, to increase the thermal runaway start temperature of the material and reduce the heat released during the thermal runaway process, thereby improving the safety performance of the material.

Furthermore, because the ternary material is a single crystal material, and the single crystal ternary material has the characteristic of orientation in (003) crystallographic orientation after the cathode plate is compacted. As shown in FIG. 4, this orientation will cause the material to expand in the thickness direction, which affects the battery performance, and causes unevenly distributed electrolyte during the charge and discharge process of the battery, resulting in lithium plating and deteriorated battery performance. According to the embodiment of the present invention, the surface of the ternary material is coated with a layer of LMFP material formed of nano-scale primary particles, and the coating layer can effectively prevent the orientation of the ternary material in the (003) crystallographic orientation, thus reducing the expansion of the ternary material and the cathode plate in the thickness direction, and improving the battery performance.

Further, to better restrict the orientation of the ternary single crystal material in the 003 crystallographic orientation, in an embodiment of the present invention, the nanohardness of the ternary material and the coating material is defined. Exemplarily, the ternary material has a nanohardness of 0.001-5 Gpa, and the coating material has a nanohardness of 0.01-10 GPa. Exemplarily, the ternary material has a nanohardness of 0.2-1.4 GPa, and the coating material has a nanohardness of 1.5-3.5 GPa. By defining the nanohardness of the ternary material and the coating material, the orientation of the ternary single crystal material in the 003 crystallographic orientation can be restricted, thus reducing the expansion of the ternary material and the cathode plate in the thickness direction, and improving the battery performance.

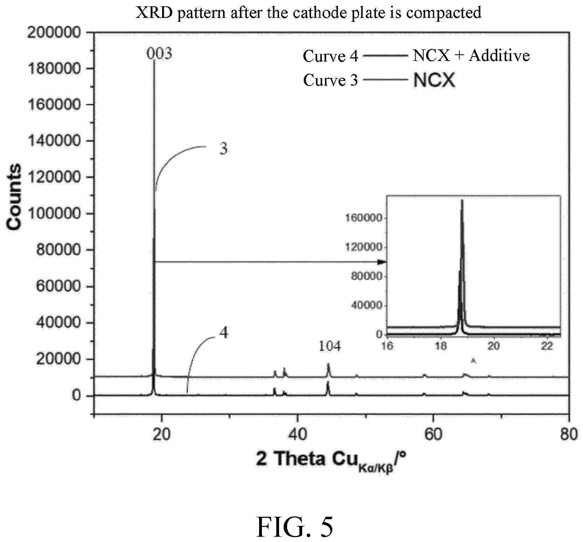

FIG. 5 shows XRD patterns of a conventional ternary material and a composite cathode material according to an embodiment of the present invention after the cathode plate is compacted. In the figure, curve 3 represents the XRD pattern of the conventional ternary material after the cathode plate is compacted, and curve 4 represents the XRD pattern of the composite cathode material according to an embodiment of the present invention after the cathode plate is compacted. As shown in FIG. 5, the XRD pattern of the composite cathode material according to an embodiment of the present invention has a decreased intensity ratio of crystallographic orientation 003 to crystallographic orientation 110 (003/110 for short) after the cathode plate is compacted, compared with the intensity ratio of 003/110 in the XRD pattern of the conventional ternary material after the cathode plate is compacted, which means that the orientation of the ternary single crystal material in 003 is suppressed. Exemplarily, in an embodiment of the present invention, the XRD pattern of the conventional ternary material after the cathode plate is compacted has an intensity ratio of 003/110 in the range of 5-200, and the XRD pattern of the composite cathode material according to an embodiment of the present invention after the cathode plate is compacted has an intensity ratio of 003/110 in the range of 10-100.

Further, in this embodiment, since the coating material is a material such as LMFP and the electrode density of LMFP is low, the energy density of the battery is affected. In the embodiment of the present invention, the tap densities of the ternary material and the coating material are defined, to realize higher electrode density of the cathode plate and ensure the energy density of the battery. Exemplarily, in an embodiment of the present invention, the ternary material has a tap density of 2.0-2.8 g/cm³, and the phase-transition material has a tap density of 0.8-1.5 g/cm³.

Further, in this embodiment, to achieve a uniform distribution of the coating material on the surface of the ternary single crystal material, the coating material is a material formed of nano-scale primary particles. The ternary material has a D50 of 3.0-6.0 µm, and the primary particles in the coating material has a particle size D50 of 10-50 nm.

Further, in an embodiment of the present invention, in order to improve the safety performance of the material and the battery, an amount of lithium carbonate can be added to the slurry of the composite cathode material. Since lithium carbonate can produce a gas when the battery fails, CID and an explosion-proof valve are reversed and the valve opening time is advanced to prevent more serious thermal runaway. Exemplarily, the content of lithium carbonate is 2-10%.

In the composite cathode material according to the embodiment of the present invention, a ternary single crystal material is employed and the surface of the ternary single crystal material is coated. On the one hand, the ternary single crystal material itself has the advantages of good high-temperature performance, less gas production, and high safety. On the other hand, the coating material coated on the surface of the ternary material has a heat isolation effect, which increases the thermal runaway start temperature of the ternary material and the battery and the heat release during the thermal runaway process, thereby improving the safety. Moreover, by means of the coating material, the phase transition of the ternary material in the charge/discharge interval is slowed down or delayed, and the capacity decrease caused by the phase transition of the ternary material during the long-term cycle process is slowed down, thereby improving the cycle performance of the battery, reducing the impedance increase of the material during the aging process, and improving the safety of the battery.

Further, in the embodiment of the present invention, the orientation of the ternary material in the 003 crystallographic orientation is restricted by defining the nanohardness of the ternary material and the coating material, and higher electrode density of the cathode plate is realized by defining the tap densities of the ternary material and the coating material, thus ensuring the energy density of the battery.

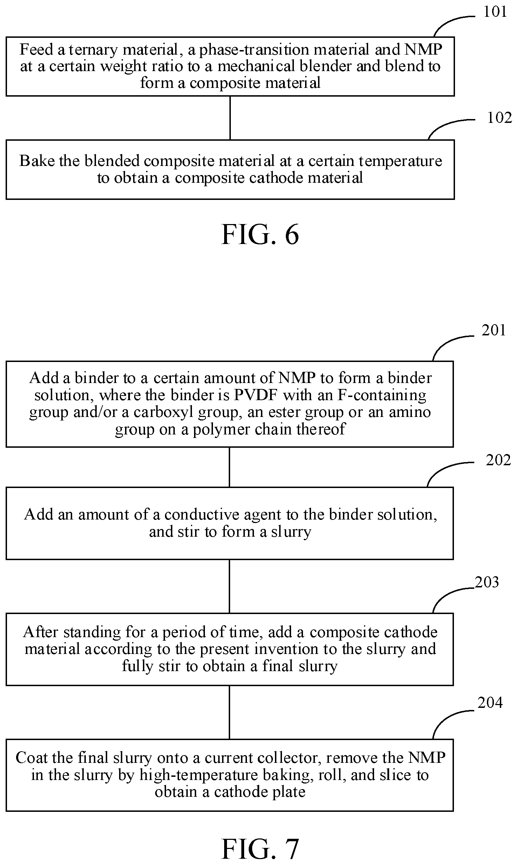

In another aspect of the present invention, a method for preparing a composite cathode material according to the present invention is provided, which includes, as shown in FIG. 6, the following step:

Step 101: Feed a ternary material, a phase-transition material and NMP at a certain weight ratio to a mechanical blender and blend to form a composite material.

Exemplarily, in this embodiment, the ternary material is a single crystal material, and the ternary material has a particle size D50 of 3.0-6.0 µm; the phase-transition material is a single crystal material or a secondary spherical material, and the primary particles in the phase-transition material have a particle size D50 of 10-50 nm; the weight ratio of the ternary material to the phase-transition material is 80:20-99.8:0.2; and the ternary material has a nanohardness of 0.001-5 Gpa, and the phase-transition material has a nanohardness of 0.01-10 GPa.

Examples of the ternary material and the phase-transition material are as described above, and will not be repeated here.

The ternary material and the phase-transition material can be prepared by methods commonly used in the art. For example, the ternary material is NCM, and the phase-transition material is LMFP, and the preparation methods therefor are, for example, provided below:

II. Preparation method of ternary material

A ternary material precursor (NiₓCo_{y}Mn_{z}(OH)₂) and a lithium source are mixed and subjected to pre-sintering, first sintering, first crushing, second sintering, and second crushing to obtain a ternary material.

The lithium source is one or more of lithium hydroxide, lithium carbonate, lithium nitrate and lithium acetate.

The sintering conditions for pre-sintering include a sintering temperature of 200-500°C, and a sintering time of 4-6 hrs.

The first sintering includes a constant-temperature stage, a heating stage and a cooling stage. The constant-temperature stage includes a first constant-temperature stage that occurs at a temperature of 800-1000°C for a time of 5-8 hrs; a second constant-temperature stage that occurs at a temperature of 1000-1100°C for a time of 8-10 hrs; and a third constant-temperature stage that occurs at a temperature of 1100-1200°C for a time of 5-10 hrs.

The heating stage includes a first heating stage that occurs at a temperature of 200-800°C for a heating time of 1.5-3.5 hrs; a second heating stage that occurs at a temperature of 800-1000°C for a heating time of 1.5-3.5 hrs; and a third heating stage that occurs at a temperature of 1000-1200°C for a heating time of 1.0-2.5 hrs.

The cooling stage includes a first cooling stage that occurs at a temperature of 1200-800°C for a cooling time of 1.5-3 hrs; and a second cooling stage that occurs at a temperature of 800-200°C for a cooling time of 0.5-2 hrs.

The first crushing includes the following: The poly-crystalline material is subjected to first ball milling for preliminary crushing, where the rotational speed in the first ball milling is 4000-8000 r/min, and preferably 5500-7500 r/min, followed by pneumatic crushing under a pressure of 5-10 MPa, and preferably 6.5-8.5 MPa.

Before the second sintering, a coating agent is added to the crushed material, where the coating agent contains one or more of Ti₃O₄, Mg(OH)₂, W₂O₃, Al₂O₃, Co(OH)₂, and H₃BO₃.

The sintering conditions for second sintering include a second sintering temperature of 500-800°C and preferably 550-750°C.

The second crushing includes the following: The second crushing is performed by mechanical milling where the rotational speed in the mechanical milling is 2000-4000 r/min, and preferably 2500-3500 r/min.

A ternary cathode material is obtained by the above process.

Preparation method of LMFP material:

FePO₄, Li₂CO₃, glucose and water are mixed at a certain ratio, and the mixed material is treated by rough grinding and fine grinding to form an aqueous solution; the aqueous solution is spray dried to form a mixture of three materials; solid-phase sintering is carried out at a high temperature, and the material obtained after the first sintering is subjected to pneumatic crushing to obtain an LMFP material.

Exemplarily, in an embodiment of the present invention, the rotational speed of the mechanical blender is 4000-7000 r/min, and the blending time is 10-30 min. Exemplarily, the rotational speed of the mechanical blender is 4500-6500 r/min, and the blending time is 15-25 min.

Step 102: Bake the blended composite material at a certain temperature to obtain a composite cathode material.

Exemplarily, in an embodiment of the present invention, the baking temperature of the composite material is 80-120°C, and the baking time is 0.5-2.5 hrs. Exemplarily, the baking temperature of the composite material is 95-105°C, and the baking time is 1-2 hrs.

In another aspect of the present invention, a cathode plate for a battery is also provided, which includes a current collector and a composite cathode material according to the present invention provided on the current collector.

Exemplarily, the current collector is, for example, an aluminum foil.

Exemplarily, the intensity ratio of the crystallographic orientation 003/110 after the cathode plate is compacted is 10-100.

Due to the use of the composite cathode material according to the embodiment of the present invention, the cathode plate according to the present invention has similar advantages, that is, it can improve the cycle performance of the battery, reduce the impedance increase of the material during the aging process, and improve the safety of the battery.

In another aspect of the present invention, a battery is also provided, which includes a cathode plate according to an embodiment of the present invention, an anode plate, a separator provided between the cathode plate and the anode plate, and an electrolyte.

Exemplarily, the cathode plate includes a current collector and a composite cathode material according to an embodiment of the present invention provided on the current collector. Exemplarily, the cathode current collector includes an aluminum foil. It should be understood that a conductive agent and a binder are also provided on the cathode current collector. For example, the weight ratio of the composite cathode material: binder: conductive agent is 100:2.0:2.2.

Exemplarily, the composite cathode material is a single-crystal NCM of which the surface is coated with a layer of LMFP material which is formed of nano-scale primary particles, and the binder is PVDF (polyvinylidene fluoride) with a special functional group on a polymer chain thereof. The special functional group is, for example, an F-containing group or a carboxyl group, an ester group or an amino group added to the polymer chain. The addition of an F-containing group can increase the gelatin resistance, and the addition of a carboxyl group, an ester group or an amino group can improve the adhesive force. The conductive agent is a combination of conductive agents including conductive carbon black, various CNTs, and graphene. These conductive agents enable mutual conduction between points and points, points and lines, and lines and lines, to better form a complete conductive network. Because the two materials are respectively nanoscale and microscale, dotted, linear or even planar conductive agent are needed to form a complete conductive network.

Exemplarily, the anode plate includes a current collector and an anode material provided on the current collector. Exemplarily, the anode current collector includes a copper foil, and the anode material is graphite. For example, the weight ratio of graphite: binder: CMC: conductive agent is 100:1.9:1.6:1.2. Exemplarily, the anode graphite is artificial graphite formed of carbon-coated secondary particles. The secondary particles are formed of smaller primary particles aggregated together, and then coated with carbon on the surfaces thereof to improve the conductivity. This can increase the rate performance and the low-temperature performance, and reduce the inherent expansion of graphite itself.

Exemplarily, the electrolyte includes one or more of EC, DMC, EMC, DEC, VC, and PS, where EC is the abbreviation of ethylene carbonate; DMC is the abbreviation of dimethyl carbonate; EMC is the abbreviation of ethyl methyl carbonate; DEC is the abbreviation of diethyl carbonate; VC is the abbreviation of vinylene carbonate; and PS is the abbreviation of polystyrene.

Exemplarily, the separator is a composite structure composed of PE, ceramic, and glue.

Due to the use of the composite cathode material according to the embodiment of the present invention, the battery according to the present invention has similar advantages, that is, it can improve the cycle performance of the battery, reduce the impedance increase of the material during the aging process, and improve the safety of the battery.

In another aspect of the present invention, a method for preparing a cathode plate according to an embodiment of the present invention is provided, which includes the following step:

Step 201: Add a binder to a certain amount of NMP to form a binder solution, that is, the binder is dissolved. The binder is specially used for ternary high-nickel materials, for example, PVDF with an F-containing group and a carboxyl group, an ester group or an amino group on a polymer chain thereof, which has increased gelatin resistance. NMP (N-methyl-2-pyrrolidone) can prevent the agglomeration of the binder. The content of NMP is determined according to the needs, and is not particularly limited.

Step 202: Add an amount of a conductive agent to the binder solution, and stir to form a slurry.

Exemplarily, a certain amount of a conductive agent is added to the binder solution, and then fully stirred on a vacuum high-speed blending device such as a vacuum high-speed planetary disperser to form a slurry.

Exemplarily, the stirring time is, for example, 10-50 min.

Exemplarily, the conductive agent is a combination of conductive agents including conductive carbon black, various CNTs and graphene.

Step 203: After standing for a period of time, add a composite cathode material according to the present invention to the slurry and fully stir to obtain a final slurry.

Exemplarily, after 10-50 min, a composite cathode material is added to the slurry and fully stirred to obtain a final slurry. The composite cathode material is as described above, and will not be repeated here.

Step 204: Coat the final slurry onto a current collector, remove the NMP in the slurry by high-temperature baking, roll, and slice to obtain a cathode plate.

Exemplarily, before the final slurry is obtained, the method further includes adding an amount of lithium carbonate to the slurry to improve the safety performance of the battery and the material.

In the present invention, experimental tests are also performed on the cathode plate prepared by the above method and the battery using the cathode plate to verify the battery performance.

### Specific Experiment

Cathode plate: composite cathode material: binder: conductive agent=100:2.0:2.2. The composite cathode material is a ternary single crystal material of which the surface is coated with a layer of LMFP material which is formed of nano-scale primary particles, the binder is PVDF with a special functional group on a polymer chain thereof, and the conductive agent is a combination of conductive agents including conductive carbon black, various CNTs and graphene.

Anode plate: graphite:binder:CMC:conductive agent=100:1.9:1.6:1.2. The anode graphite is artificial graphite formed of carbon-coated secondary particles.

The electrolyte is a mixed solution of EC, DMC, EMC, DEC, VC, and PS.

The separator is PE + ceramic + glue.

### Experiment procedure:

The components and percentages by weight thereof in the slurry mentioned in this experiment are as follows: binder PVDF5130: 2.1%; conductive agent 1.9%; composite cathode material (Ni83 of which the surface is coated with a layer of LMFP material which is formed of nano-scale primary particles) 96%. The preparation process includes dissolution of the binder; addition of different kinds of conductive materials; and addition of the composite cathode material. The ratio of composite cathode material, binder and conductive agent in the slurry is 96:2.1:1.9.

The experimental parameters and performance test results are shown in Tables 1 and 2.

**Table 1. Experimental parameters and performance parameters in the examples**

| Experiment No. | Composite cathode material | Particle size D50 (ncm-µm, lfmp-nm) | Tap density (g/dm³) | Nanohardness (GPa) | Ratio of crystallogra phic orientation (003) to crystallogra phic orientation (110) after the plate is compacted | Electrode density (g/cm³) | 45°C-C500 | Thickness change rate of battery at 60°C for 28D/% | Rate performance (ratio of discharge capacity at 5C to that at 0.2C) | Low-temper ature performance (ratio of discharge capacity at -20°C to that at 25°C) |
|---|---|---|---|---|---|---|---|---|---|---|
| 1 | NCM: LMFP=80:20 | NCM:4.5 | NCM:2.5 | NCM:0.8 | 12 | 3.55 | 88 | 6% | 88% | 78% |
| | | LMFP:30 | LMFP: 1.2 | LMFP:2.5 | | | | | | |
| 2 | NCM: LMFP=90:10 | NCM:4.5 | NCM:2.5 | NCM:0.8 | 13 | 3.58 | 88 | 5% | 90% | 82% |
| | | LMFP:30 | LMFP: 1.2 | LMFP:2.5 | | | | | | |
| 3 | NCM: LMFP=95:5 | NCM:4.5 | NCM:2.5 | NCM:0.8 | 13.5 | 3.56 | 93 | 6% | 92% | 80% |
| | | LMFP:30 | LMFP: 1.2 | LMFP:2.5 | | | | | | |
| 4 | NCM: LMFP=99:1 | NCM:4.5 | NCM:2.5 | NCM:0.8 | 15 | 3.62 | 87 | 8% | 95% | 82% |
| | | LMFP:30 | LMFP: 1.2 | LMFP:2.5 | | | | | | |
| 5 | NCM: LMFP=95:5 | NCM:3.0 | NCM:2.5 | NCM:0.8 | 12 | 3.5 | 87 | 9% | 93% | 85% |
| | | LMFP:50 | LMFP: 1.2 | LMFP:2.5 | | | | | | |
| 6 | NCM: LMFP=95:5 | NCM:6.0 | NCM:2.5 | NCM:0.8 | 15 | 3.54 | 91 | 7% | 85% | 78% |
| | | LMFP:40 | LMFP: 1.2 | LMFP:2.5 | | | | | | |
| 7 | NCM: LMFP=95:5 | NCM:5.5 | NCM:2.5 | NCM.0.8 | 13.5 | 3.52 | 94 | 6% | 90% | 81% |
| | | LMFP:20 | LMFP: 1.2 | LMFP:2.5 | | | | | | |
| 8 | NCM: LMFP=95:5 | NCM:4.5 | NCM:2.5 | NCM:0.8 | 16 | 3.51 | 89 | 8% | 93% | 85% |
| | | LMFP: 10 | LMFP: 1.2 | LMFP:2.5 | | | | | | |
| 9 | NCM: LMFP=95:5 | NCM:4.5 | NCM:2.0 | NCM:0.8 | 14.5 | 3.45 | 93 | 6% | 92% | 80% |
| | | LMFP:30 | LMFP:0.8 | LMFP:2.5 | | | | | | |
| 10 | NCM: LMFP=95:5 | NCM:4.5 | NCM:2.8 | NCM:0.8 | 11.5 | 3.58 | 93 | 6% | 92% | 80% |
| | | LMFP:30 | LMFP:1.5 | LMFP:2.5 | | | | | | |
| 11 | NCM: LMFP=95:5 | NCM:4.5 | NCM:2.5 | NCM:0.3 | 15 | 3.55 | 88 | 11% | 90% | 78% |
| | | LMFP:30 | LMFP: 1.2 | LMFP: 1.5 | | | | | | |
| 12 | NCM: LMFP=95:5 | NCM:4.5 | NCM:2.5 | NCM:1.4 | 10 | 3.51 | 93 | 6% | 92% | 80% |
| | | LMFP:30 | LMFP: 1.2 | LMFP:3.5 | | | | | | |
| 13 | NCM: LMFP=95:5 | NCM:4.5 | NCM:2.5 | NCM:1.0 | 20 | 3.52 | 88 | 10% | 92% | 80% |
| | | LMFP:30 | LMFP:1.2 | LMFP:1.6 | | | | | | |
| 14 | NCM: LMFP=95:5 | NCM:4.5 | NCM:2.9 | NCM:0.8 | 19 | 3.47 | 87 | 12% | 89% | 79% |
| | | LMFP:30 | LMFP:0.7 | LMFP: 2.5 | | | | | | |
| 15 | NCM: LMFP=95:5 | NCM:4.5 | NCM:1.9 | NCM: 0.8 | 18 | 3.45 | 86 | 9% | 87% | 78% |
| | | LMFP:30 | LMFP:1.6 | LMFP: 2.5 | | | | | | |

**Table 2. Experimental parameters and performance parameters in the comparative examples**

| Experiment No. | Composite cathode material | Particle size D50 (ncm-µm, lfmp-nm) | Tap density (g/dm3) | Nanohardness (GPa) | Ratio of crystallogra phic orientation (003) to crystallogra phic orientation (110) after the plate is compacted | Electrode density (g/cm³) | 45°C-C500 | Thickness change rate of battery at 60°C for 28D/% | Rate performance (ratio of discharge capacity at 5C to that at 0.2C) | Low-temperat ure performance (ratio of discharge capacity at -20°C to that at 25°C) |
|---|---|---|---|---|---|---|---|---|---|---|
| 1 | NCM: LMFP=70:30 | NCM: 4.5 | NCM: 2.5 | NCM: 0.8 | 10 | 3.2 | 80 | 8% | 70% | 60% |
| | | LMFP: 30 | LMFP: 1.2 | LMFP: 2.5 | | | | | | |
| 2 | NCM: LMFP=100:0 | NCM: 4.5 | NCM: 2.5 | NCM: 0.8 | 150 | 3.6 | 79 | 13% | 89% | 78% |
| | | LMFP: 30 | LMFP: 1.2 | LMFP: 2.5 | | | | | | |
| 3 | NCM: LMFP=95:5 | NCM: 7 | NCM: 2.5 | NCM: 0.8 | 12 | 3.52 | 87 | 6% | 75% | 65% |
| | | LMFP: 30 | LMFP: 1.2 | LMFP: 2.5 | | | | | | |
| 4 | NCM: LMFP=95:5 | NCM: 4.5 | NCM: 2.5 | NCM: 0.8 | 10 | 3.3 | 86 | 7% | 65% | 60% |
| | | LMFP: 90 | LMFP: 1.2 | LMFP: 2.5 | | | | | | |
| 5 | NCM: LMFP=95:5 | NCM: 2.5 | NCM: 2.5 | NCM: 0.8 | 15 | 3.2 | 75 | 18% | 90% | 80% |
| | | LMFP: 30 | LMFP: 1.2 | LMFP: 2.5 | | | | | | |
| 6 | NCM: LMFP=95:5 | NCM: 4.5 | NCM: 2.5 | NCM: 0.8 | 20 | 3.1 | 80 | 9% | 85% | 78% |
| | | LMFP: 5 | LMFP: 1.2 | LMFP: 2.5 | | | | | | |
| 7 | NCM: LMFP=95:5 | NCM: 4.5 | NCM: 2.5 | NCM: 0.0001 | 130 | 3.6 | 80 | 20% | 90% | 80% |
| | | LMFP: 30 | LMFP: 1.2 | LMFP: 2.5 | | | | | | |
| 8 | NCM: LMFP=95:5 | NCM: 4.5 | NCM: 2.5 | NCM: 7 | 115 | 3.5 | 80 | 8% | 85% | 79% |
| | | LMFP: 30 | LMFP: 1.2 | LMFP: 2.5 | | | | | | |
| 9 | NCM: LMFP=95:5 | NCM: 4.5 | NCM: 2.5 | NCM: 1.0 | 120 | 3.55 | 78 | 12% | 90% | 80% |
| | | LMFP: 30 | LMFP: 1.2 | LMFP: 12 | | | | | | |

The parameter explanation and the performance test methods in the above table are as follows:

Ratio of crystallographic orientation (003) to crystallographic orientation (110) after the plate is compacted: The XRD pattern of the plate prepared with uncoated cathode material has an intensity ratio of 003/110 ranging from 5 to 200; and the XRD pattern of the plate prepared with a composite cathode material of coated ternary material has an intensity ratio of 003/110 ranging from 10 to 100.

Electrode density of plate: which is the density of the plate after compaction. The electrode density of the plate having the ternary material is generally above 3.0 g/cm³. Due to process limitations and the possibility of material crushing, the electrode density generally does not exceed 3.8 g/cm³.

45°C-C500 refers to the capacity retention rate of the battery. The upper limit of this range is 100% without decrease; and there may also be a sudden drop during the cycle process of the battery, and in this case, the capacity retention rate is very low and is below 50%;

Thickness change rate of battery at 60°C for 28D/%: This parameter is mainly provided for evaluating the gas production of the battery. The change rate is preferably 0, that is, no gas is produced in the battery. If the battery produces a large amount of gas, the change rate may exceed 100%.

Rate performance (ratio of discharge capacity at 5C to that at 0.2C): This parameter is provided for evaluating the discharge capacity of the battery at a large rate and is generally 50%-98%.

Low-temperature performance (ratio of discharge capacity at -20°C to that at 25°C): This parameter is provided for evaluating the discharge capacity of the battery at a low temperature, and fluctuates greatly depending on the battery, which can be 5%-90%.

### Test methods and results in the above experiment

Particle size: 1) Test instrument: Laser particle size analyzer, reference model Malvern 2000/3000.

2) Test method: Dispersion in deionized water and ultrasonication for 10 min. Refractive index of the particles: 1.74. Data such as D0.01, D10, D50, D90, and D99 in the volume distribution and the original data are required.

Tap density: The tap density is tested by Dandong Bettersize (BT-1001) intelligent powder comprehensive tester. The powder is placed in a 100 ml measuring cylinder, and weighed. The measuring cylinder is vibrated on the tester for 300 times at a vibration frequency of 300 times/mi. The volume of the powder in the measuring cylinder is measured after the vibration is over. According to the weight and volume of the powder, the tap density is calculated.

Nanohardness: The nanohardness is tested by a nanoindenter, which controls the continuous load change by a computer and monitors the indentation depth online. A complete indentation process includes two steps, that is, the so-called loading process and unloading process. During the loading process, an external load is applied to an indenter to press it into the sample surface. As the load increases, the depth of the indenter into the sample increases accordingly. When the load reaches the maximum, the external load is removed. An indentation mark is remained on the surface. The nanohardness is calculated from the applied pressure and the area of the indentation mark. Nanohardness depends on the selected crystal plane.

Ratio of crystallographic orientation (003) to crystallographic orientation (110) after the plate is compacted: This parameter is determined according to JY/T 009-1996 General rules for X-ray polycrystalline diffractometry.

Electrode density of plate: An uncompacted cathode plate is prepared into a size of 40* 100mm, and compacted by Daye compacting machine, and the electrode density of the plate is calculated according to the areal density and the thickness after compaction of the plate.

45°C-C500: Test method: At a temperature condition of 45±5°C, the battery is charged to 4.2V at a constant current of 1C and then discharged to 2.5V at a constant current of 1C; and the capacity retention rate after 500 cycles, that is, C500, is calculated with the discharge capacity C1 of the first cycle as a reference.

Thickness change rate of battery at 60°C for 28D/%: The battery is charged to 4.2V at a constant current of 0.2C, and placed at room temperature for 2 hrs. The initial thickness of the battery is recorded. The battery is stored in a constant-temperature cabinet at 60°C for 28 days, and the thickness after storage is recorded. The thickness change is calculated.

Rate performance (ratio of discharge capacity at 5C to that at 0.2C): The battery is charged to 4.2 V at 25°C and a constant current of 0.2C; and then constant-current discharged to 2.5V at different rates of 0.2C and 5C. The ratio of the discharge capacity at 5C to that at 0.2C is calculated.

Low-temperature performance (ratio of discharge capacity at -20°C to that at 25°C): The battery is stored for 6 hrs in a constant-temperature incubator at 25°C, and at -20°C for 12 hrs. At 25°C, the battery is charged to 4.2 V/cell at a constant current of 0.2C; and then discharged to 2.5 V/cell at a constant current of 1/3C at 25°C and -20°C. The ratio of the discharge capacity at -20°C to that at 25°C is calculated.

The composite cathode materials in Examples 1-14 all have excellent performance. Specifically, in terms of the orientation of the compacted plate after the composite cathode material is prepared into a cathode plate, the greater the ratio of the peak intensities (003) to (110) is, the higher the degree of orientation of the composite cathode material will be, and the more obvious the orientation of the composite cathode material where the C-axis is perpendicular to the current collector will be. The smaller the ratio is, the weaker the orientation of the cathode composite material where the C-axis is perpendicular to the current collector will be, and the distribution of the layered structure is irregular, which is beneficial to slowing down the thickness change of the cathode plate caused by the contraction and expansion of the unit cell volume during the charge and discharge process. The ratio of the peak intensities 003 to 110 can reach a minimum of 11.5, and a maximum of only 20, indicating that the composite cathode materials prepared in the examples has a poor orientation, which slows down the expansion of the cathode plate during the charge and discharge process. In terms of the electrode density after the composite cathode material is prepared into the cathode plate, a higher electrode density is conducive to the improvement of the energy density of the battery, and a lower density goes against the development of the energy density of the battery. In the examples, the electrode density of the cathode plate has a maximum reaching 3.62 g/cm³ and a minimum reaching 3.45 g/cm³. Therefore, the cathode plate has a higher electrode density, since the bulk material and the coating material in the composite cathode material both have a high tap density. After a battery is prepared with the composite cathode material, the capacity retention rate after 500 cycles at 45°C, the thickness change rate after storage at 60°C for 28D, the rate performance and the low-temperature discharge performance of the battery are mainly related to the particle size of NCM in the composite cathode material, the particle size of the primary particles in the coating material, and the weight ratio of the bulk material to the coating material in the composite material. The larger the particle size of NCM in the composite material is, the larger the particle size of the primary particles in the coating material will be. The degree of side reactions between the material and the electrolyte is reduced, and less gas is produced by the material. The less the dissolved Mn content of the coating material is, the better the cycle performance and the smaller the thickness change rate of the battery after storage will be. Moreover, due to the increase of the particle size, the diffusion path of lithium ions becomes longer, so the rate performance and low-temperature performance of the battery will deteriorate. The composite cathode material in the embodiment has a maximum capacity retention rate of 94% and a minimum capacity retention rate of 86% after 500 cycles at 45°C. The thickness change rate of the battery after storage at 60°C for 28D is as low as 5% and 12% at most. The cathode material has good high-temperature performance. The ratio of discharge capacities at a rate of 5C has a maximum of 95%, and a minimum of 85%. The ratio of discharge capacities at a low temperature of -20°C has a maximum of 85%, and a minimum of 78%. The composite cathode material has good low-temperature performance and rate performance.

In Comparative Example 1, the proportion of LMFP in the composite cathode material is too high. The two materials have different structures. During the charge and discharge process, the diffusion resistance of lithium ions is very large, the high-temperature cycle performance, and the rate and low-temperature performance of the battery deteriorate, and the electrode density of the cathode plate decreases.

In Comparative Example 2, the cathode material is not coated, and the crystallographic orientation of the compacted plate cannot be well suppressed. The expansion and contraction of the plate during the charge and discharge process will cause the uneven distribution of the electrolyte inside the battery, leading to lithium plating inside the battery and deteriorated cycle performance of the battery.

In Comparative Example 3, the particle size of the bulk NCM material in the composite cathode material is too large, the diffusion path of lithium ions is too long during the charge and discharge process, and the low-temperature and rate performances of the battery deteriorate.

In Comparative Example 4, the particle size of the coating material LMFP in the composite cathode material is too large, which will also deteriorate the low-temperature and rate performances of the battery.

In Comparative Example 5, the particle size of the bulk NCM material in the composite cathode material is too small, the specific surface area increases, the side reaction with the electrolyte increases, the cycle performance of the battery becomes worse, the gas production after storage increases, and the electrode density of the cathode plate decreases accordingly.

In Comparative Example 6, the particle size of the coating material LMFP in the composite cathode material is too small, the amount of dissolved Mn increases, the electrode density of the cathode plate decreases, and the high-temperature cycle performance deteriorates.

In Comparative Example 7, the hardness of the bulk NCM material in the composite cathode material is too low, and it is preferentially compacted when the cathode plate is compacted. The orientation of the crystal cannot be suppressed, and the hardness is too low. After the cathode plate is compacted, the particles are easy to break, causing exposure of large fresh surfaces to the electrolyte, so the side reactions increase, and the cycle performance of the material deteriorates.

In Comparative Example 8, the hardness of the bulk NCM material in the composite cathode material is too high, and LMFP cannot inhibit the orientation of the crystal. The cathode plate expands and contracts during the charge and discharge process, causing uneven electrolyte distribution in the battery. This causes lithium plating inside the battery, the cycle performance of the battery deteriorates, and the electrode density of the cathode plate decreases accordingly.

In Comparative Example 9, the hardness of LMFP in the composite cathode material is too high, and the LMFP material is also a nano-particle material. When the cathode plate is compacted, the nano-material enters NCM, so LMFP cannot inhibit the orientation of the crystal. At the same time, the surface of the NCM material is destroyed, and the cycle performance of the battery deteriorates.

Although exemplary embodiments have been described with reference to accompanying drawings, it should be understood that the above exemplary embodiments are only illustrative, and not intended to limit the scope of the present invention thereto. Various changes and modifications can be made by a person of ordinary skill in the art without departing from the scope and spirit of the present invention. All these changes and modifications are intended to be embraced in the scope of the present invention as defined in the appended claims.

Numerous specific details are set forth in the specification provided herein. However, it can be understood that, the embodiments of the present invention may be practiced without the specific details. In some examples, known methods, structures, and technologies are not disclosed in detail, so as not to mix up understanding on the specification.

Similarly, it should be understood that to simplify the present invention and help to understand one or more of disclosure aspects, in the descriptions of the exemplary embodiments of the present invention, features of the present invention are sometimes grouped into a single embodiment or figure, or descriptions thereof. However, the methods in the present invention should not be construed as reflecting the following intention: that is, the present invention claimed to be protected is required to have more features than those clearly set forth in each claim. More definitely, as reflected in the corresponding claims, the inventiveness of the disclosure lies in resolving the corresponding technical problem using features less than all features of a single embodiment disclosed above. Therefore, the claims following the Detailed Description are hereby expressly incorporated into the Detailed Description, with each claim standing on its own as a separate embodiment of the present invention.

A person skilled in the art may understand that, all features disclosed in this specification (including the accompanying claims, abstract and drawings), and all processes or units of any method or device disclosed herein may be combined in any combination, unless features are mutually exclusive. Unless otherwise explicitly stated, each feature disclosed in this specification (including the accompanying claims, abstract and drawings) may be replaced with an alternative feature serving the same, equivalent or similar purpose.

In addition, those skilled in the art can understand that, although some embodiments herein include some but not other features included in other embodiments, combinations of features of different embodiments are meant to be within the scope of the present invention and to form different embodiments. For example, in the claims, any one of the claimed embodiments may be used in any combination.

It should be noted that the above-mentioned embodiments illustrate rather than limit the present invention, and those skilled in the art may devise alternative embodiments without departing from the scope of the appended claims. In the claims, any reference signs placed between parentheses shall not be construed as limiting the claims. The present invention can be implemented by way of hardware including several different elements and an appropriately programmed computer. In the unit claims enumerating several apparatuses, several of these apparatuses can be specifically embodied by the same item of hardware. The use of the words such as "first", "second", "third", and the like does not denote any order. These words can be interpreted as names.

## Claims

1. A composite cathode material for a battery, comprising a ternary material and a phase-transition material, wherein the phase-transition material undergoes phase transition in the charge/discharge interval of the ternary material;
the ternary material has a single crystal structure, the phase-transition material has a single crystal structure or a poly-crystalline structure, and the phase-transition material is coated on the surface of the ternary material;
the weight ratio of the ternary material to the phase-transition material is 80:20-99.8:0.2;
the ternary material has a nanohardness of 0.001-5 Gpa, and the phase-transition material has a nanohardness of 0.01-10 Gpa; and
the ternary material has a particle size D50 of 3.0-6.0 µm, and the primary particles in the phase-transition material have a particle size D50 of 10-50 nm.

2. The composite cathode material according to claim 1, wherein the ternary material has a nanohardness of 0.2-1.4 GPa, and the phase-transition material has a nanohardness of 1.5-3.5 GPa.

3. The composite cathode material according to claim 1, wherein the ternary material has a tap density of 2.0-2.8 g/cm³ and the phase-transition material has a tap density of 0.8-1.5 g/cm³.

4. The composite cathode material according to claim 1, wherein the ternary material has a particle size D50 of 3.5-5.0 µm, and the primary particles in the phase-transition material have a particle size D50 of 20-40 nm.

5. The composite cathode material according to any one of claims 1 to 4, wherein the ternary material has a chemical formula of LiNiₓCo_{y}M_{z}, wherein x+y+z=1, and M comprises Mn, Al, Zr, Ti, Y, Sr or W.

6. The composite cathode material according to claim 5, wherein the ternary material comprises a nickel-cobalt-manganese ternary material or a nickel-cobalt-aluminum ternary material.

7. The composite cathode material according to any one of claims 1 to 4, wherein the phase-transition material has an olivine structure, and the phase-transition material has a chemical formula of LiAₓB_{y}PO₄, wherein x+y=1, A comprises Fe, Co, Mn, Ni, Cr or V, and B comprises Fe, Co, Mn, Ni, Cr or V.

8. The composite cathode material according to claim 7, wherein the phase-transition material comprises lithium manganese iron phosphate, lithium manganese vanadium phosphate, or lithium chromium iron phosphate.

9. A method for preparing a composite cathode material according to any one of claims 1 to 8, comprising
feeding a ternary material, a phase-transition material and NMP at a certain weight ratio to a mechanical blender and blending to form a composite material; and
baking the blended composite material at a certain temperature to obtain the composite cathode material,
wherein the ternary material is a single crystal material, and the ternary material has a particle size D50 of 3.0-6.0 µm; the phase-transition material is a single crystal material or a secondary spherical material, and the primary particles in the phase-transition material have a particle size D50 of 10-50 nm; the weight ratio of the ternary material to the phase-transition material is 80:20-99.8:0.2; and the ternary material has a nanohardness of 0.001-5Gpa, and the phase-transition material has a nanohardness of 0.01-10GPa.

10. The method according to claim 9, wherein the rotational speed of the mechanical blender is 4000-7000 r/min, and the blending time is 10-30 min.

11. The method according to claim 10, wherein the rotational speed of the mechanical blender is 4500-6500 r/min, and the blending time is 15-25 min.

12. The method according to claim 9, wherein the baking temperature of the composite material is 80-120°C, and the baking time is 0.5-2.5 hrs.

13. The method according to claim 12, wherein the baking temperature of the composite material is 95-105°C, and the baking time is 1-2 hrs.

14. A cathode plate for a battery, comprising a current collector and a composite cathode material as described in any one of claims 1 to 8 provided on the current collector.

15. The cathode plate according to claim 14, wherein the intensity ratio of crystallographic orientation 003 to crystallographic orientation 110 is 10-100 after the cathode plate is compacted.

16. A method for preparing a cathode plate according to any one of claims 14 and 15, comprising:
adding a binder to an amount of NMP to form a binder solution, wherein the binder is PVDF with an F-containing group and/or a carboxyl group, an ester group, or an amino group on a polymer chain thereof;
adding an amount of a conductive agent to the binder solution, and stirring to form a slurry;
after standing for a period of time, adding a composite cathode material according to any one of claims 1 to 8 to the slurry and fully stirring to obtain a final slurry; and
coating the final slurry onto a current collector, removing the NMP in the slurry by high-temperature baking, rolling, and slicing to obtain the cathode plate.

17. The method according to claim 16, further comprising, before the final slurry is obtained, adding an amount of lithium carbonate to the slurry.

18. A battery, comprising: a cathode plate according to claim 14 or 15, an anode plate, and a separator provided between the cathode plate and the anode plate.
